(19) Europäisches Patentamt / European Patent Office / Office européen des brevets

(11) **EP 3 441 495 B1**

(12) **EUROPEAN PATENT SPECIFICATION**

(45) Date of publication and mention
of the grant of the patent:
**12.01.2022 Bulletin 2022/02**

(21) Application number: **17779117.5**

(22) Date of filing: **04.04.2017**

(51) Int Cl.:
*C22C 38/58* (2006.01)   *C22C 38/02* (2006.01)
*C22C 38/44* (2006.01)   *C22C 38/46* (2006.01)
*C22C 38/48* (2006.01)   *C22C 38/00* (2006.01)
*C21D 6/00* (2006.01)    *C21D 8/00* (2006.01)
*C21D 9/52* (2006.01)    *C21D 9/08* (2006.01)
*C21D 6/02* (2006.01)    *C21D 8/10* (2006.01)

(86) International application number:
**PCT/JP2017/014008**

(87) International publication number:
**WO 2017/175739 (12.10.2017 Gazette 2017/41)**

(54) **AUSTENITIC STAINLESS STEEL MATERIAL**

AUSTENITISCHES EDELSTAHLMATERIAL

MATÉRIAU D'ACIER INOXYDABLE À BASE D'AUSTÉNITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.04.2016 JP 2016077628**

(43) Date of publication of application:
**13.02.2019 Bulletin 2019/07**

(73) Proprietor: **Nippon Steel Corporation**
**Tokyo 100-8071 (JP)**

(72) Inventors:
• **TAKAGI, Takamitsu**
  **Tokyo 100-8071 (JP)**
• **NAKAMURA, Jun**
  **Tokyo 100-8071 (JP)**
• **UEYAMA, Masaki**
  **Tokyo 100-8071 (JP)**
• **TERUNUMA, Masaaki**
  **Tokyo 100-8071 (JP)**

(74) Representative: **J A Kemp LLP**
**80 Turnmill Street**
**London EC1M 5QU (GB)**

(56) References cited:
EP-A1- 2 692 886        EP-B1- 2 692 886
WO-A1-2012/132992       WO-A1-2015/159554
WO-A1-2015/159554       WO-A1-2016/068009
JP-A- H0 565 601        JP-A- H06 179 952
US-A- 4 554 028         US-A- 4 559 090

**Description**

TECHNICAL FIELD

The present invention relates to a stainless steel material more specifically to an austenitic stainless steel material.

BACKGROUND ART

Recent years have seen the progress of lively studies for the practical application of transportation equipment that utilizes hydrogen in place of fossil fuels as energy. For example, fuel cell powered vehicles that run on hydrogen as fuel, and hydrogen stations where fuel cell powered vehicles are supplied with hydrogen, have been under development.

When stainless steel is used for hydrogen stations, the stainless steel is placed in a high-pressure hydrogen gas environment. For this reason, an excellent strength is demanded of a stainless steel used for hydrogen stations.

International Application Publication No. WO 2012/132992 (Patent Literature 1), International Application Publication No. WO 2004/083476 (Patent Literature 2), International Application Publication No. WO 2004/083477 (Patent Literature 3), and International Application Publication No. WO 2004/111285 (Patent Literature 4) propose stainless steels that are used in high-pressure hydrogen environments and have high strengths.

The austenitic stainless steel for high-pressure hydrogen gas disclosed in Patent Literature 1, belonging to the same patent family with EP2692886 A1, contains, in mass percent, C: 0.10% or less, Si: 1.0% or less, Mn: 3% or more and less than 7%, Cr: 15 to 30%, Ni: 10% or more and less than 17%, Al: 0.10% or less, N: 0.10 to 0.50%, and at least one of V: 0.01 to 1.0% and Nb: 0.01 to 0.50%, with the balance being Fe and impurities, of which impurities P accounts for 0.0050% or less, and S accounts for 0.050% or less, wherein the austenitic stainless steel has a tensile strength of 800 MPa or more, a grain size number (ASTM E 112) is 8 or greater, and the austenitic stainless steel contains an alloy carbo-nitride with a maximum diameter of 50 to 1000 nm at 0.4 /$\mu$m$^2$ or more in cross section observation.

The stainless steel for hydrogen gas disclosed in Patent Literature 2 contains, in mass percent, C: 0.02% or less, Si: 1.0% or less, Mn: 3 to 30%, Cr: larger than 22% to 30%, Ni: 17 to 30%, V: 0.001 to 1.0%, N: 0.10 to 0.50%, and Al: 0.10% or less, with the balance being Fe and impurities, of which impurities P accounts for 0.030% or less, S accounts for 0.005% or less, and Ti, Zr, and Hf each account for 0.01% or less, wherein the contents of Cr, Mn, and N satisfies 5Cr + 3.4Mn $\leq$ 500N.

The stainless steel for high-pressure hydrogen gas disclosed in Patent Literature 3 contains, in mass percent, C: 0.04% or less, Si: 1.0% or less, Mn: 7 to 30%, Cr: 15 to 22%, Ni: 5 to 20%, V: 0.001 to 1.0%, N: 0.20 to 0.50%, and Al: 0.10% or less, with the balance being Fe and impurities, of which impurities P accounts for 0.030% or less, S accounts for 0.005% or less, and Ti, Zr, and Hf each account for 0.01% or less, wherein the contents of Cr, Mn, and N satisfies 2.5Cr + 3.4Mn $\leq$ 300N.

The austenitic stainless steel for hydrogen gas disclosed in Patent Literature 4 has a chemical composition containing, in mass percent, C: 0.10% or less, Si: 1.0% or less, Mn: 0.01 to 30%, P: 0.040% or less, S: 0.01% or less, Cr: 15 to 30%, Ni: 5.0 to 30%, sol.Al: 0.10% or less, and N: 0.001 to 0.30%, with the balance being Fe and impurities, wherein the austenitic stainless steel includes a micro-structure in which an X-ray integrated intensity I (111) on a cross section along a direction perpendicular to a processing direction is five times or less that in a random orientation, and an X-ray integrated intensity I (220) on a cross section along the processing direction satisfies I(220)/I(111) $\leq$ 10.

US 4,559,090 discloses and austenitic alloy.

CITATION LIST

PATENT LITERATURE

Patent Literature 1: International Application Publication No. WO 2012/132992
Patent Literature 2: International Application Publication No. WO 2004/083476
Patent Literature 3: International Application Publication No. WO 2004/083477
Patent Literature 4: International Application Publication No. WO 2004/111285

SUMMARY OF INVENTION

TECHNICAL PROBLEM

Now, a stainless steel to be used for hydrogen stations is required to have not only an excellent strength but also suppressed variation in strength. Stainless steels disclosed in Patent Literature 1 to Patent Literature 4 mentioned above have strengths of 700 MPa or more even after solution treatment is performed, and the stainless steel of Patent Literature 4 has a high strength by being subjected to solution treatment and cold working. However, these Patent Literatures give no consideration to variation in strength. Even the stainless steels described in Patent Literature 1 to Patent Literature 4 mentioned above may show large variations in strength, failing to provide consistent high-strengths.
An objective of the present invention is to provide an austenitic stainless steel material having a consistent high-strength across the overall length of the steel material.

SOLUTION TO PROBLEM

An austenitic stainless steel material according to the present embodiment has a chemical composition consisting of, in mass percent, C: 0.10% or less, Si: 0.2 to 1.0%, Mn: 3 to 8%, P: 0.05% or less, S: 0.03% or less, Ni: 10 to 20%, Cr: 15 to 30%, N:0.20 to 0.70%, Mo: 0 to 5.0%, V: 0 to 0.5%, and Nb: 0 to 0.5%, with the balance being Fe and impurities, the austenitic stainless steel material having a grain size number of 6.0 or greater, the grain size number conforming to ASTM E 112. The tensile strength of the austenitic stainless steel material is 800 MPa or more, and the difference between the maximum value and the minimum value of the tensile strength is 50 MPa or less. The number of alloy carbo-nitrides including carbides and nitrides having a circle equivalent diameter of larger than 1000 nm in the steel is 10 /mm$^2$ or more.

ADVANTAGEOUS EFFECTS OF INVENTION

The austenitic stainless steel material according to the present embodiment has a consistent high-strength across the overall length of the steel material.

DESCRIPTION OF EMBODIMENTS

The present inventors conducted investigations and studies on the high strengthening of an austenitic stainless steel material and variation in strength across the overall length of the steel material, and obtained the following findings.

(A) Methods for increasing the strength include solid-solution strengthening using N and grain refinement. The austenitic stainless steel of the present embodiment contains 0.20 to 0.70% of N, and the strength thereof is increased through the solid-solution strengthening. The strength is further increased by grain refining on grains.
(B) The variation in strength across the overall length of the steel material is attributable to the grain size of the steel material. With a smaller variation in grain size in the steel material, the variation in strength can be reduced. Specifically, when the grain size number based on the ASTM E 112 is 6.0 or greater, and the difference between the maximum value and the minimum value of the grain size number (hereafter, referred to as a grain size difference ΔGS) across the overall length of the steel material is 1.5 or smaller, the difference between the maximum value and the minimum value of the tensile strength (hereafter, referred to as a strength difference ΔTS)across the overall length of the steel material becomes 50 MPa or less, which enables the variation in strength to be suppressed sufficiently.
(C) To suppress the variation in strength, controlling temperature variation in a starting material in the hot working is effective. Variation in grain size is brought most remarkably in the hot working. In the starting material, the introduction amount of strain differs between a portion at a lower temperature and a portion at a higher temperature. The difference in the introduction amount of strain causes the difference in how grains are refined in recrystallization. As a result, the variation in grain size is increased. Therefore, it is preferable that the temperature variation in a starting material in hot working is small.
Specifically, in the starting material, if the difference between the temperature of a portion for which the hot working is first completed, at the completion of the working (hereafter, referred to as an initial temperature) and the temperature of a portion for which the hot working is last completed, at the completion of the working (hereafter, referred to as an end temperature) (temperature difference ΔT) is 100°C or less, the grain size difference ΔGS can be controlled to 1.5 or smaller. Consequently, it is possible to control a strength difference ΔTS to 50 MPa or less.
(D) By performing heat treatment on a steel material to cause coarse alloy carbo-nitrides to precipitate, precipitation strengthening occurs, further increasing the strength of the steel material. When the grain size number of a steel material is 6.0 or greater, and the number of alloy carbo-nitrides having circle equivalent diameters of larger than 1000 nm (hereafter, referred to as a coarse alloy carbo-nitrides) is 10 /mm$^2$ or more in the steel, a tensile strength of 800 MPa or more is obtained. By performing the heat treatment at a heat treatment temperature set at 930°C to less than 1000°C, it is possible to obtain 10 /mm$^2$ or more of the coarse alloy carbo-nitrides.

Here, the alloy carbo-nitrides contain Cr, V, Nb, Mo as a main component, and mean Cr$_2$N, Z phase, namely Cr(Nb, V)(C, N) and MX (M: Cr, V, Nb, Mo, X: C, N). The "main component" means that the component accounts for 40% or more in mass percent. In addition, the alloy carbo-nitrides in the present invention include those of which contents of C (carbon) are extremely low, namely nitrides. The alloy carbo-nitrides according to the present invention include carbides.

The invention is defined in the claims.

Hereafter, the austenitic stainless steel material of the present embodiment will be described in detail. The sign "%" following each element means mass percent unless otherwise noted.

[Chemical Composition]

The austenitic stainless steel material of the present embodiment has a chemical composition that consists of the following elements.

C: 0.10% or less

Carbon (C) is unavoidably contained. C stabilizes austenite in an fcc structure, which hardly causes hydrogen brittleness. In addition, C combines with Cr or the like, causing precipitation strengthening to increase the strength of steel. However, an excessively high content of C results in the precipitation of carbides in grain boundaries, decreasing the toughness of steel. Consequently, the content of C is 0.10% or less. An upper limit of the content of C is preferably 0.08%, more preferably 0.06%. In addition, a preferable lower limit of the content of C to stabilize austenite is 0.005%.

Si: 0.2 to 1.0%

Silicon (Si) combines with Ni and Cr to form intermetallic compounds. In addition, Si contributes to the growth of intermetallic compounds such as a sigma phase ($\sigma$ phase). These intermetallic compounds decrease the hot workability of steel. Therefore, the content of Si is 1.0% or less. An upper limit of the content of Si is preferably 0.8%. From the viewpoint of deoxidizing steel the lower limit of the content of Si is 0.2%.

Mn: 3 to 8%

Manganese (Mn) stabilizes austenite and suppresses the generation of martensite, which has a high susceptibility to hydrogen brittleness. In addition, Mn combines with S to form MnS, increasing the machinability of steel. An excessively low content of Mn results in failure to provide the effects described above. In contrast, an excessively high content of Mn results in a decrease in the ductility and the hot workability of steel. Consequently, the content of Mn is 3 to 8%. A lower limit of the content of Mn is preferably 4.0%, more preferably 5.0%. An upper limit of the content of Mn is preferably 6.0%, more preferably 5.9%.

P: 0.05% or less,

Phosphorus (P) is an impurity. P decreases the hot workability and the toughness of steel. Therefore, the content of P is 0.05% or less. An upper limit of the content of P is preferably 0.045%, more preferably 0.035%, still more preferably 0.020%. The content of P is preferably as low as possible.

S: 0.03% or less

Sulfur (S) combines with Mn to form MnS, increasing the machinability of steel. However, an excessively high content of S results in a decrease in the toughness of steel. Therefore, the content of S is 0.03% or less. An upper limit of the content of S is preferably 0.02%, more preferably 0.01%. The content of S is preferably as low as possible.

Ni: 10 to 20%

Nickel (Ni) stabilizes austenite. In addition, Ni increases the ductility and the toughness of steel. An excessively low content of Ni results in failure to provide the effects described above. In contrast, an excessively high content of Ni results in saturation of the effects described above, increasing production costs. Consequently, the content of Ni is 10 to 20%. A lower limit of the content of Ni is preferably 11.5%, more preferably 12.0%. An upper limit of the content of Ni is preferably 13.5%, more preferably 13.4%.

Cr: 15 to 30%

Chromium (Cr) increases the corrosion resistance of steel. In addition, Cr combines with N through heat treatment to form alloy carbo-nitrides such as $Cr_2N$, causing precipitation strengthening to increase the strength of steel. An excessively low content of Cr results in failure to provide the effects described above. In contrast, an excessively high content of Cr causes the generation of $M_{23}C_6$ carbides, resulting in decreases in the ductility and the toughness of steel. Consequently, the content of Cr is 15 to 30%. A lower limit of the content of Cr is preferably 20.5%, more preferably 21.0%. An upper limit of the content of Cr is preferably 23.5%, more preferably 23.4%.

N: 0.20 to 0.70%

Nitrogen (N) stabilizes austenite. In addition, N increases the strength of steel through solid-solution strengthening. Furthermore, N combines with Cr through heat treatment to form alloy carbo-nitrides such as $Cr_2N$, causing precipitation strengthening to increase the strength of steel. An excessively low content of N results in failure to provide the effects described above. In contrast, an excessively high content of N results in a decrease in the toughness of steel. Consequently, the content of N is 0.20 to 0.70%. A lower limit of the content of N is preferably 0.21%, more preferably 0.22%. An upper limit of the content of N is preferably 0.40%, more preferably 0.35%.

The balance of the chemical composition of the austenitic stainless steel material according to the present embodiment is Fe and impurities. Here, the impurities mean elements that are mixed from ores and scraps used as raw material, a producing environment, or the like, when the austenitic stainless steel material is produced in an industrial manner, and are allowed to be mixed within ranges in which the impurities have no adverse effects on the austenitic stainless steel material of the present embodiment.

[Optional Elements]

The austenitic stainless steel material according to the present embodiment may further contain, instead of a part of Fe, one, or two or more elements selected from the group consisting of Mo, V, and Nb. All of these elements increase the strength of steel.

Mo: 0 to 5.0%

Molybdenum (Mo) is an optional element and need not be contained. When contained, Mo subjects austenite to solid-solution strengthening. In addition, Mo increases the corrosion resistance of steel. However, an excessively high content of Mo is liable to cause intermetallic compounds to precipitate, results in a decrease in the ductility and the toughness of steel. Consequently, the content of Mo is 0 to 5.0%. A lower limit of the content of Mo is preferably 1.5%, more preferably 1.9%. An upper limit of the content of Mo is preferably 3.0%, more preferably 2.9%.

V: 0 to 0.5%

Vanadium (V) is an optional element and need not be contained. When contained, V forms its carbide, increasing the strength of steel. However, an excessively high content of V saturates the effect, resulting in an increase in production costs. Consequently, the content of V is 0 to 0.5%. A lower limit of the content of V is preferably 0.1%, more preferably 0.12%. An upper limit of the content of V is preferably 0.3%, more preferably 0.28%.

Nb: 0 to 0.5%

Niobium (Nb) is an optional element and need not be contained. When contained, Nb forms its carbide, increasing the strength of steel. However, an excessively high content of Nb saturates the effect, resulting in an increase in production costs. Consequently, the content of Nb is 0 to 0.5%. A lower limit of the content of Nb is preferably 0.1%, more preferably 0.12%. An upper limit of the content of Nb is preferably 0.3%, more preferably 0.28%.

[Strength and Strength Difference ∆TS]

In the austenitic stainless steel material of the present embodiment, a tensile strength is 800 MPa or more, and a difference between the maximum value and the minimum value of the tensile strength (hereafter, referred to as a strength difference ∆TS) is 50 MPa or less. This makes the austenitic stainless steel material of the present embodiment have a consistent high-strength across the overall length of the steel material. The above strength and strength difference ∆TS can be achieved with, for example, the following structure.

[Grain Size]

The austenitic stainless steel material of the present embodiment has a grain size number specified in ASTM E 112 of 6.0 or greater. The grain size number is measured in conformity with ASTM E 112. A grain size number less than 6.0 decreases the strength. With a grain size number of 6.0 or greater, it is possible to obtain a high strength in the austenitic stainless steel material having the above chemical composition. Specifically, a tensile strength of 800 MPa or more required for the austenitic stainless steel material of the present embodiment is obtained.

The grain size number is determined by the following method. A test specimen for microscopic observation is fabricated from a center portion of a cross section perpendicular to a lengthwise direction of the austenitic stainless steel material. In the surface of the test specimen, a surface corresponding to the above cross section (referred to as an observation surface) is used, and a microscopic test method for grain size specified in ASTM E 112 is performed, and the grain size number is evaluated. Specifically, the observation surface is subjected to mechanical polishing, and thereafter etched using a well-known etching reagent (e.g., Glyceregia, Kalling's reagent, or Marble's reagent), and crystal grain boundaries on the observation surface are caused to appear. For each of ten visual fields on the etched surface, a grain size number is determined. The area of each visual field is about 10.2 mm$^2$. By performing a comparison with a grain size standard chart specified in ASTM E 112, the grain size number of each visual field is evaluated. The average of the grain size numbers of the respective visual fields is defined as the grain size number of the austenitic stainless steel material of the present embodiment.

[Grain Size Difference ∆GS]

In addition, in the austenitic stainless steel material of the present embodiment, the difference between the maximum value and the minimum value of grain size numbers that are measured in any plurality of portions across overall length of the austenitic stainless steel material (referred to as the grain size difference ∆GS) is 1.5 or smaller. When the grain size difference ∆GS is more than 1.5, the difference between the maximum value and the minimum value of tensile strengths that are measured in a plurality of portions of the steel material (strength difference ∆TS) becomes larger than 50 MPa, and variation in strength across the overall length of the steel material becomes large. When the grain size difference ∆GS is 1.5 or smaller, the strength difference ∆TS becomes 50 MPa or less, and the variation in strength across the overall length of the steel material is suppressed. As a result, the austenitic stainless steel material of the present embodiment has a consistent high-strength.

The grain size difference ∆GS is measured by the following method. From any plurality of portions across the overall length of the austenitic stainless steel material in the lengthwise direction, the same test specimens for microscopic observation as those described above are taken. Using each of the test specimens, the microscopic test method for grain size specified in ASTM E 112 is performed in the same manner as described above, and the grain size number is determined. Of the obtained grain size numbers, a maximum value and a minimum value are selected, and the difference between the maximum value and the minimum value is defined as the grain size difference ∆GS. In a case where the austenitic stainless steel material is a steel pipe, a steel bar, a wire rod, or the like, the test specimens are taken from both end portions of the steel material in a hot working direction (rolling direction, extruding direction, or the like) (a top portion and a bottom portion), and the grain size difference ∆GS is determined. Here, the top portion is defined as a portion extending from a front end of the steel material toward the center portion of the steel material within a range of 200 mm, and the bottom portion is defined as a portion extending from a rear end of the steel material toward the center portion of the steel material within a range of 200 mm.

The smaller the grain size difference ∆GS, the more preferable it is. An upper limit of the grain size difference ∆GS is preferably 1.3, more preferably 1.0.

[Alloy Carbo-Nitrides]

By performing heat treatment on a steel material to cause coarse alloy carbo-nitrides to precipitate, precipitation strengthening occurs, increasing the strength of the steel material.

The alloy carbo-nitrides contain Cr, V, Nb, Mo as a main component and include Cr$_2$N, Z phase, namely Cr(Nb, V)(C, N) and MX (M: Cr, V, Nb, Mo, X: C, N). In addition, the carbo-nitrides in the present invention include those of which contents of C (carbon) are extremely low, namely nitrides. The carbo-nitrides in the present invention also include carbides.

In the present embodiment, the number of alloy carbo-nitrides having a circle equivalent diameter of larger than 1000 nm (coarse alloy carbo-nitrides) in the steel is 10 /mm$^2$ or more. In this case, it is possible to obtain a high tensile strength through the precipitation strengthening. If the number of the coarse alloy carbo-nitrides is excessively large, the toughness of the steel may decrease, and thus an upper limit of the number of the coarse alloy carbo-nitrides in the steel is preferably $1.5 \times 10^5$ /mm$^2$. By performing the heat treatment with a heat treatment temperature set at 930°C to less than 1000°C, it is possible to obtain 10 /mm$^2$ or more of the coarse alloy carbo-nitrides.

[Method for Measuring Number of Coarse Alloy Carbo-Nitrides]

The number of the coarse alloy carbo-nitrides is defined as follows. A sample is taken that includes a center portion of a cross section of the austenitic stainless steel material, the cross section being perpendicular to the lengthwise direction of the austenitic stainless steel material (an observation region having a radius of 10 mm around the central axis of the steel material). The above observation region of the sample is subjected to mirror polish. Thereafter, in each of any ten visual fields (200 μm × 200 μm) in the observation region, alloy carbo-nitrides are identified from precipitates and inclusions using a scanning electron microscope (SEM) equipped with an energy-dispersive X-ray spectroscope (EDS). In each visual field, a circle equivalent diameter of each of the identified alloy carbides is determined by image analysis. The circle equivalent diameter means a diameter (nm) of a circle into which the area of an alloy carbide in the visual field is converted. The number of alloy carbo-nitrides having circle equivalent diameters of larger than 1000 nm (coarse alloy carbo-nitrides) is counted. The average value of the coarse alloy carbo-nitrides obtained in each of the ten visual fields is defined as the number of coarse alloy carbo-nitrides (/mm$^2$) in the present specification.

[Producing Method]

Description will be made about an example of a production method for an austenitic stainless steel material according to the present embodiment. The present producing method includes a preparation step of preparing a starting material, a hot working step of performing hot working on the starting material to produce an intermediate material, a cooling step of cooling the intermediate material subjected to the hot working, and as necessary, a heat treatment step of performing heat treatment on the cooled intermediate material. The producing method will be described below.

[Preparation Step]

A molten steel having the chemical composition described above is produced. As necessary, a well-known degassing treatment is performed on the produced molten steel. From the molten steel subjected to the degassing treatment, a starting material is produced. Examples of the producing method for the starting material include a continuous casting process. By the continuous casting process, a continuous casting material (the starting material) is produced. The continuous casting material is, for example, a slab, a bloom, a billet, and the like. The molten steel may be subjected to an ingot-making process into an ingot.

[Hot Working Step]

The starting material (continuous casting material or ingot) is subjected to hot working by a well-known method to be produced into the intermediate material of the austenitic stainless steel material. Examples of the intermediate material include a steel pipe, a steel bar, a wire rod, and the like. The intermediate material is produced by, for example, hot extrusion working according to the Ugine-Sejournet process.

In the hot working step, a heating temperature and a reduction of area are as follows.

Heating temperature: 1160°C or less

An excessively high heating temperature causes grains to coarsen, with the result that the grain size number of structures of the steel becomes less than 6.0. Therefore, the heating temperature is 1160°C or less. An upper limit of the heating temperature is preferably 1100°C.

A lower limit of the heating temperature may be a well-known temperature. An excessively low heating temperature makes the coarse alloy carbo-nitrides hard to be generated even with the heating treatment to be described later that is performed after the hot working. Consequently, a lower limit of the heating temperature is preferably 1060°C.

Reduction of area: larger than 70%

When the cross-sectional area of the starting material before the hot working is denoted by A0 (mm$^2$), and the cross-sectional area of the starting material after the final operation of the hot working is denoted by A1 (mm$^2$), a reduction of area RA (%) is defined by Formula (1).

$$RA = (A0 - A1) / A0 \times 100 \qquad (1)$$

When the above reduction of area is 70% or less, an amount of strains to be introduced into the steel material becomes insufficient, and grains are hard to be refined. When the reduction of area is 70% or more, an adequate amount of strains is introduced into the steel material through the hot working, which refines the grains, making the grain size number 6.0 or greater. A lower limit of the reduction of area is preferably 75%.

Temperature difference ΔT in the starting material in the hot working: 100°C or less

In the hot working step, in the starting material, the difference between the temperature of a portion for which the hot working is first completed, at the completion of the hot working, (referred to as the initial temperature) and the temperature of a portion for which the hot working is last completed, at the completion of the hot working, (referred to as the end temperature) (temperature difference ΔT) is 100°C or less.

For example, in a case where the intermediate product is produced by performing piercing-rolling, hot extrusion, and hot rolling, the portion for which the hot working is first completed of the starting material is a top portion, and the portion for which the hot working is last completed of the starting material is a bottom portion. Therefore, in this case, the initial temperature is a temperature of the top portion at the completion of the hot working, and the end temperature is a temperature of the bottom portion at the completion of the hot working.

When the temperature difference ΔT of the starting material is larger than 100°C, variation in temperature across the overall length of the steel material becomes excessively large. In this case, the grain size of the top portion and the grain size of the bottom portion differ from each other significantly, and the grain size difference ΔGS becomes larger than 1.5. As a result, the strength difference ΔTS becomes larger than 50 MPa.

When the temperature difference ΔT of the starting material is 100°C or less, variation in grain size between the top portion and the bottom portion is suppressed, and the grain size difference ΔGS becomes 1.5 or less. As a result, the strength difference ΔTS becomes 50 MPa or less. An upper limit of the temperature difference ΔT is preferably 90°C, more preferably 80°C.

[Cooling Step]

In the cooling step, the intermediate product subjected to the hot working is cooled at 0.10°C/sec or more. When the cooling rate is less than 0.10°C/sec, σ phases precipitate. The σ phases decrease corrosion resistance. To increase the corrosion resistance, the generation of σ phases needs to be suppressed. Furthermore, when the cooling rate is less than 0.10°C/sec, grains coarsen, which decreases the strength of the steel. Consequently, the cooling rate is 0.10°C/sec or more.

On the intermediate product after the cooling, straightening may be performed to straighten the bends of the intermediate product. In a case of performing the straightening, for example, a straightener is disposed in line or off line on a downstream side of a cooling device and/or an upstream side of a heating device.

On the intermediate product subjected to the cooling or the straightening, descaling treatment may be performed. The descaling treatment is performed in the form of, for example, pickling or shotblasting. The descaling treatment is performed to remove oxide scale that is unavoidably formed on the surface of the intermediate product due to being heated in the step prior thereto. Through the above steps, the austenitic stainless steel material of the present embodiment is produced.

[Heat Treatment Step]

In the heat treatment step, 10 /mm$^2$ or more of coarse alloy carbo-nitrides are caused to precipitate. Through this step, the tensile strength of the austenitic stainless steel material is further increased. A heat treatment temperature is as follows.

Heat treatment temperature: 930°C to less than 1000°C

A heat treatment temperature less than 930°C leads to a failure to obtaining structures of an austenite single phase, resulting in a decrease in strength. The heat treatment temperature less than 930°C further leads to the generation of σ phases, resulting in a decrease in the corrosion resistance of steel. In contrast, a heat treatment temperature of 1000°C or more causes coarse alloy carbo-nitrides in steel to become smaller or totally dissolved, and the number of coarse alloy carbo-nitrides becomes less than 10 /mm². As a result, precipitation strengthening cannot be obtained.

A heat treatment temperature of 930°C to less than 1000°C causes coarse alloy carbo-nitrides to precipitate, and the number of the coarse alloy carbo-nitrides becomes 10 /mm² or more. As a result, precipitation strengthening occurs, increasing the strength of the steel material. In addition, a heat treatment temperature less than 1000°C causes coarse alloy carbo-nitrides to precipitate sufficiently, with the result that a strength of 800 MPa or more is obtained with stable also when the grain size number is within a range of 6.0 to less than 8.0.

Note that, even if the heat treatment temperature falls out of the above range, it is possible to obtain a high strength as long as the grain size number is 6.0 or greater, and the number of the coarse alloy carbo-nitrides in steel is 10 /mm² or more, and it is possible to control the strength difference ΔTS to 50 MPa or less as long as the grain size difference ΔGS is 1.5 or smaller.

A retention time in the heat treatment at the above heat treatment temperature is, for example but not specially limited to, one minute or longer.

The production method according to the present embodiment may include a cold working step of performing cold working, after the heat treatment step. However, solid solution heat treatment is not performed after the cold working step because there is the possibility of failing to obtain coarse alloy carbo-nitrides.

[EXAMPLES]

Molten steels having chemical compositions shown in Table 1 were produced.

[Table 1]

TABLE 1

| Steel | Chemical Composition (In Mass%, Balance Being Fe and Impurities) | | | | | | | | | | |
|---|---|---|---|---|---|---|---|---|---|---|---|
| | c | Si | Mn | P | S | Ni | Cr | N | Mo | V | Nb |
| A | 0.03 | 0.3 | 4.5 | 0.02 | 0.0003 | 12.0 | 22.3 | 0.32 | 2.1 | 0.2 | 0.2 |
| B | 0.03 | 0.4 | 4.4 | 0.01 | 0.0008 | 12.1 | 21.9 | 0.32 | 2.1 | 0.2 | 0.2 |
| c | 0.01 | 0.3 | 5.2 | 0.02 | 0.0002 | 13.1 | 22.0 | 0.32 | 2.2 | 0.2 | 0.2 |
| D | 0.01 | 0.4 | 5.3 | 0.01 | 0.0004 | 12.9 | 21.8 | 0.31 | - | - | - |
| E | 0.01 | 0.3 | 5.2 | 0.02 | 0.0020 | 13.2 | 22.0 | 0.32 | - | - | 0.1 |
| F | 0.03 | 0.4 | 4.5 | 0.02 | 0.0020 | 15.6 | 22.1 | 0.19 | 2.1 | 0.1 | 0.1 |

Using the molten steels, ingots each weighing 3400 kg were produced. The ingots were subjected to the hot working to be produced into austenitic stainless steel bars (intermediate products) (45 to 75 mm in diameter × 3000 mm in length). In the hot working, initial temperatures (temperatures of top portions at the completion of hot extrusion), end temperatures (temperatures of bottom portions at the completion of the hot extrusion), and reductions of area RA(%) were those shown in Table 2.

[Table 2]

TABLE 2

| Test Number | Steel | Heating Temperature (°C) | Initial Temperature (°C) | End Temperature (°C) | Temperature Difference ΔT (°C) | Reduction of Area RA (%) | Cooling Rate (°C/Sec) | Heat Treatment Temperature (°C) | Grain Size Number of Top Portion | Grain Size Number of Bottom Portion | Grain Size Difference ΔGS | Number of Coarse Alloy Carbo-Nitrides (/mm²) | Top Portion TS (MPa) | Bottom Portion TS (MPa) | Strength Difference ΔTS (MPa) | Average TS (MPa) |
|---|---|---|---|---|---|---|---|---|---|---|---|---|---|---|---|---|
| 1 | B | 1102 | 1102 | 1003 | 99 | 80.2 | 1.00 | 993 | 7.6 | 8.3 | 0.7 | 141 | 821.0 | 840.8 | 19.8 | 830.9 |
| 2 | B | 1038 | 1038 | 1038 | 0 | 88.9 | 0.70 | 973 | 8.9 | 8.9 | 0.0 | 183 | 860.7 | 857.4 | 3.3 | 859.1 |
| 3 | D | 1150 | 1150 | 1101 | 49 | 76.0 | 1.10 | 994 | 7.0 | 7.3 | 0.3 | 139 | 804.5 | 811.3 | 6.8 | 807.9 |
| 4 | E | 1150 | 1150 | 1101 | 49 | 76.0 | 0.20 | 979 | 7.1 | 7.3 | 0.2 | 170 | 808.4 | 817.7 | 9.3 | 813.1 |
| 5 | A | 1210 | 1210 | 1161 | 49 | 91.4 | 2.10 | 960 | 4.3 | 4.6 | 0.3 | 210 | 751.8 | 762.3 | 10.5 | 757.1 |
| 6 | A | 1180 | 1180 | 1147 | 33 | 89.2 | 0.20 | 1002 | 4.6 | 4.8 | 0.2 | 122 | 757.8 | 778.5 | 20.7 | 768.2 |
| 7 | B | 1162 | 1162 | 1113 | 49 | 93.8 | 0.50 | 984 | 5.8 | 6.1 | 0.3 | 160 | 773.8 | 800.1 | 26.3 | 787.0 |
| 8 | C | 1150 | 1150 | 709 | 441 | 12.0 | 1.00 | 1029 | 3.6 | 5.3 | 1.7 | 65 | 738.2 | 790.3 | 52.1 | 764.3 |
| 9 | C | 1150 | 1150 | 1134 | 16 | 10.0 | 0.70 | 985 | 5.8 | 5.9 | 0.1 | 158 | 770.3 | 777.1 | 6.8 | 773.7 |
| 10 | c | 1150 | 1150 | 1117 | 33 | 90.0 | 0.07 | 980 | 4.8 | 5.2 | 0.4 | 156 | 777.5 | 793.2 | 15.7 | 785.4 |
| 11 | C | 1130 | 1130 | 1048 | 82 | 85.0 | 0.30 | 600 | 7.2 | 7.7 | 0.5 | 156400 | 792.7 | 799.0 | 6.3 | 795.9 |
| 12 | C | 1150 | 1150 | 1117 | 33 | 97.0 | 0.90 | 1200 | 4.0 | 4.2 | 0.2 | 0 | 741.6 | 743.0 | 1.4 | 742.3 |
| 13 | F | 1150 | 1150 | 1150 | 0 | 76.0 | 0.40 | 1031 | 6.1 | 6.1 | 0.0 | 61 | 730.4 | 739.3 | 8.9 | 734.9 |
| 14 | A | 1140 | 1140 | 1124 | 16 | 71.0 | 0.10 | 1100 | 6.2 | 6.3 | 0.1 | 0 | 762.7 | 768.9 | 6.2 | 765.8 |
| 15 | B | 1093 | 1093 | 1060 | 33 | 76.0 | 0.50 | 1097 | 6.5 | 6.7 | 0.2 | 0 | 768.3 | 787.1 | 18.8 | 777.7 |
| 16 | C | 1157 | 1157 | 1013 | 144 | 72.0 | 0.40 | 960 | 6.0 | 8.8 | 2.8 | 210 | 802.0 | 860.7 | 58.7 | 831.4 |
| 17 | C | 1143 | 1143 | 1021 | 122 | 71.0 | 1.20 | 1046 | 6.1 | 8.9 | 2.8 | 29 | 800.5 | 862.1 | 61.6 | 831.3 |
| 18 | A | 1150 | 1150 | 1101 | 49 | 76.0 | 1.00 | - | 6.3 | 6.8 | 0.5 | 0 | 782.4 | 795.2 | 12.8 | 788.8 |

The produced material pipes were cooled at cooling rates shown in Table 2. In addition, on the cooled material pipes, the straightening and the descaling treatment were performed. Furthermore, the heat treatment was performed at heat treatment temperatures shown in Table 2 to produce austenitic stainless steel materials (steel pipes). The retention time was 45 minutes. On a test number 18, the heat treatment was not performed. Note that the tensile strength (the grain size) is greatly influenced by a work completion temperature in the hot working, there are a tendency for the top portion, at a high temperature, to have a high strength (small grain size) and a tendency for the bottom portion, at a low temperature, to have a low strength (large grain size). For that reason, a maximum value and a minimum value of tensile strength were measured for each of the top portion and the bottom portion.

[Measuring Grain Size Number]

Using test specimens taken from a top portion and a bottom portion of the produced steel material of each test number subjected to the hot working, a grain size test was conducted based on the above ASTM E 112. The samples were taken from positions corresponding to the top portion and the bottom portion of each steel material (wall-thickness center portions). The grain size numbers of the top portion and the bottom portion were determined, and in addition, the grain size difference $\Delta$GS was determined. The resultant grain size numbers and grain size differences $\Delta$GS are shown in Table 2.

[Counting Number of Coarse Alloy Carbo-Nitrides]

From a wall-thickness center portion of the steel material of each test number, a test specimen was taken. Using the taken test specimen, the number of coarse alloy carbo-nitrides ($/mm^2$) was determined by the above method.

[Tension Test]

From center portions of the top portion and the bottom portion of the steel material of each test number, a round-bar tensile test specimen was taken. The round-bar tensile test specimen includes a wall-thickness center portion of the steel material (steel pipe), and a parallel portion of the round bar specimen was parallel to a lengthwise direction of the steel material. The diameter of the parallel portion was 5 mm. Using the round bar specimen, in conformance with JIS Z2241(2011), a tension test was performed in the atmosphere at a normal temperature (25°C), and tensile strengths TS (MPa) of the top portion and the bottom portion of each test number were determined. In addition, the strength difference $\Delta$TS (MPa) was determined for each test number.

[Test Results]

Table 2 shows test results.

Referring to Table 2, as to the steels of test numbers 1 to 4, their chemical compositions and producing conditions were appropriate. As a result, the grain size numbers were 6.0 or greater, and the grain size differences $\Delta$GS were 1.5 or smaller. Furthermore, the numbers of coarse alloy carbo-nitrides were 10 $/mm^2$ or more. Therefore, the tensile strengths were as high as 800 MPa or more, in addition, the strength differences $\Delta$TS were 50 MPa or less, and thus consistent high-strengths were obtained across the overall lengths of the steel materials.

In contrast, as to test numbers 5 to 7, their chemical compositions were appropriate, but their heating temperatures in the hot working were excessively high. Therefore, the grain size numbers of the top portion and/or the bottom portion were less than 6.0. As a result, the strengths of the steels were less than 800 MPa, indicating low strengths.

As to a test number 8, its chemical composition was appropriate, but its temperature difference $\Delta$T in the hot working was larger than 100°C, and its reduction of area was less than 70%. Therefore, the grain size number thereof was less than 6.0, and the grain size difference $\Delta$GS was larger than 1.5. As a result, the strength of the steel was less than 800 MPa, indicating a low strength. In addition, the strength difference $\Delta$TS was larger than 50 MPa, indicating a large variation in strength.

As to a test number 9, its chemical composition was appropriate, but its reduction of area in the hot working was less than 70%. Therefore, the grain size number was less than 6.0. As a result, the tensile strength was less than 800 MPa, indicating a low strength.

As to a test number 10, its chemical composition was appropriate, but its cooling rate after the hot working was less than 0.10°C/sec. Therefore, the grain size number was less than 6.0. As a result, the strength of the steel was less than 800 MPa, indicating a low strength.

As to a test number 11, its chemical composition was appropriate, but its heat treatment temperature after the cooling was less than 930°C. As a result, the strength of the steel was less than 800 MPa, indicating a low strength.

As to a test number 12, its chemical composition was appropriate, but its heat treatment temperature after the cooling was as excessively high as 1200°C. For that reason, the number of coarse alloy carbo-nitrides was less than 10 /mm$^2$, and the grain size number was less than 6.0. As a result, the tensile strength was less than 800 MPa.

As to a test number 13, the content of N was excessively low. As a result, the tensile strength was less than 800 MPa.

As to test numbers 14 and 15, their chemical compositions were appropriate, but their heat treatment temperatures after the cooling were 1000°C or more. Therefore, the numbers of coarse alloy carbo-nitrides were less than 10 /mm$^2$. As a result, the tensile strengths were less than 800 MPa.

As to test numbers 16 and 17, their chemical compositions were appropriate, but their temperature differences ∆T of the steel materials in the hot working were larger than 100°C. Therefore, the grain size differences ∆GS were more than 1.5. As a result, the strength differences ∆TS were more than 50 MPa, indicating large variations in strength.

In the test number 18, the heat treatment was not performed. Therefore, no coarse alloy carbo-nitrides were present. As a result, the tensile strength was less than 800 MPa.

As described above, the embodiment according to the present invention has been described. However, the aforementioned embodiment is merely an example for practicing the present invention. Therefore, the present invention is not limited to the aforementioned embodiment, and the aforementioned embodiment can be modified and implemented as appropriate without departing from the scope of the present invention.

**Claims**

1. An austenitic stainless steel material comprising:

   a chemical composition consisting of, in mass percent:

   C: 0.10% or less;
   Si: 0.2 to 1.0%;
   Mn: 3 to 8%;
   P: 0.05% or less;
   S: 0.03% or less;
   Ni: 10 to 20%;
   Cr: 15 to 30%;
   N: 0.20 to 0.70%;
   Mo: 0 to 5.0%;
   V: 0 to 0.5%; and
   Nb: 0 to 0.5%, with the balance being Fe and impurities,

   wherein a grain size number conforming to ASTM E 112 is 6.0 or greater, a tensile strength is 800 MPa or more, a difference between a maximum value and a minimum value of the tensile strength is 50 MPa or less, and a number of alloy carbo-nitrides including carbides and nitrides with circle equivalent diameters of larger than 1000 nm in steel is 10 /mm$^2$ or more, measured as defined in the description.

2. The austenitic stainless steel material according to claim 1, wherein the chemical composition contains one, or two or more elements selected from the group consisting of:

   Mo: 1.5 to 5.0%;
   V: 0.1 to 0.5%; and
   Nb: 0.1 to 0.5%.

3. The austenitic stainless steel material according to claim 1 or claim 2, wherein a difference between a maximum value and a minimum value of the grain size number is 1.5 or smaller.

4. The austenitic stainless steel material according to any one of claims 1 to 3, wherein the austenitic stainless steel material is one of a steel pipe, a steel bar, and a wire rod.

**Patentansprüche**

1. Austenitisches rostfreies Stahlmaterial, das Folgendes umfasst:

eine chemische Zusammensetzung, die in Massenprozent aus Folgendem besteht:

C: 0,10 % oder weniger;
Si: 0,2 bis 1,0 %;
Mn: 3 bis 8 %;
P: 0,05% oder weniger;
S: 0,03% oder weniger;
Ni: 10 bis 20%;
Cr: 15 bis 30%;
N: 0,20 bis 0,70%;
Mo: 0 bis 5,0%;
V: 0 bis 0,5%; und
Nb: 0 bis 0,5 %, wobei der Rest aus Fe und Verunreinigungen besteht,

wobei eine Korngrößenzahl gemäß ASTM E 112 6,0 oder größer ist, eine Zugfestigkeit 800 MPa oder mehr beträgt, eine Differenz zwischen einem Maximalwert und einem Minimalwert der Zugfestigkeit 50 MPa oder weniger beträgt, und die Anzahl der legierten Carbo-Nitride, einschließlich Karbide und Nitride mit einem Kreisäquivalentdurchmesser von mehr als 1000 nm in Stahl, 10 /mm$^2$ oder mehr beträgt, gemessen wie in der Beschreibung definiert.

2. Austenitisches rostfreies Stahlmaterial nach Anspruch 1, wobei die chemische Zusammensetzung ein oder zwei oder mehr Elemente enthält, die aus der Gruppe ausgewählt sind, die aus Folgendem besteht:

Mo: 1,5 bis 5,0 %;
V: 0,1 bis 0,5%; und
Nb: 0,1 bis 0,5 %.

3. Austenitisches rostfreies Stahlmaterial nach Anspruch 1 oder Anspruch 2, wobei eine Differenz zwischen einem Maximalwert und einem Minimalwert der Korngrößenzahl 1,5 oder weniger beträgt.

4. Austenitisches rostfreies Stahlmaterialnach einem der Ansprüche 1 bis 3, wobei das austenitische rostfreie Stahlmaterial ein Stahlrohr, ein Stahlstab oder ein Walzdraht ist.

**Revendications**

1. Matériau en acier inoxydable austénitique comprenant :

une composition chimique constituée de, en pourcentage en masse :

C : 0,10 % ou moins ;
Si : 0,2 à 1,0 % ;
Mn : 3 à 8 %;
P : 0,05 % ou moins ;
S : 0,03 % ou moins ;
Ni : 10 à20 %;
Cr : 15 à 30 %;
N : 0,20 à 0,70 % ;
Mo : 0 à 5,0 % ;
V : 0 à 0,5 % ; et
Nb : 0 à 0,5%, le reste étant du Fe et des impuretés,

dans laquelle un numéro granulométrique conforme à la norme ASTM E 112 est de 6,0 ou plus, une résistance à la traction est de 800 MPa ou plus, une différence entre une valeur maximale et une valeur minimale de la résistance à la traction est de 50 MPa ou moins, et un nombre d'alliages carbonitrures y compris des carbures et des nitrures avec des diamètres équivalents circulaires supérieurs à 1000 nm dans l'acier est de 10/mm$^2$ ou plus, mesuré comme défini dans la description.

**2.** Matériau en acier inoxydable austénitique selon la revendication 1, **caractérisé en ce que** la composition chimique contient un, ou deux ou plusieurs éléments choisis dans le groupe constitué par :

Mo : 1,5 à 5,0%;
V : 0,1 à 0,5 %; et
Nb : 0,1 à 0,5%.

**3.** Matériau en acier inoxydable austénitique selon la revendication 1 ou 2, dans lequel une différence entre une valeur maximale et une valeur minimale du numéro granulométrique est de 1,5 ou moins.

**4.** Matériau en acier inoxydable austénitique selon l'une quelconque des revendications 1 à 3, dans lequel le matériau en acier inoxydable austénitique est l'un d'un tuyau en acier, d'une barre en acier et d'un fil machine.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012132992 A
- WO 2004083476 A
- WO 2004083477 A

- WO 2004111285 A
- EP 2692886 A1
- US 4559090 A